Europäisches Patentamt

**European Patent Office**

**Office européen des brevets**

(11) Veröffentlichungsnummer: **0 019 856**
A1

## (12) EUROPÄISCHE PATENTANMELDUNG

(21) Anmeldenummer: **80102848.1**

(22) Anmeldetag: **22.05.80**

(51) Int. Cl.³: **G 01 F 9/00, G 01 F 11/28**

(30) Priorität: **01.06.79 DE 2922483**

(43) Veröffentlichungstag der Anmeldung: **10.12.80**
**Patentblatt 80/25**

(84) Benannte Vertragsstaaten: **BE CH DE FR GB IT LI**

(71) Anmelder: **AGFA-GEVAERT AKTIENGESELLSCHAFT,**
**Patentabteilung, D-5090 Leverkusen 1 (DE)**

(72) Erfinder: **Frenken, Hans, Dipl.-Ing., Am Berg 22,**
**D-5068 Odenthal-Osenau (DE)**
Erfinder: **Friedsam, Josef, Götscherweg 49,**
**D-4018 Langenfeld (DE)**

(54) **Verfahren und Vorrichtung zur volumetrischen Messung von Flüssigkeiten.**

(57) Es wird ein Verfahren und eine Vorrichtung zur volumetischen Messung pulsierender oder kontinuierlich fließender Flüssigkeitsmengen beschrieben, wobei die aus einem Vorratsbehälter (1) ausfließende Flüssigkeit gleichzeitig einen kommunizierenden Meßbehälter (2) auffüllt und zur Messung der Flüssigkeitsmenge ein Dreiwegeventil (3) so geschaltet wird, daß der Meßbehälter (2) entleert wird und die Zeit (t) gemessen wird, in welcher das bekannte Volumen zwischen 2 Elektroden (10, 11) des Meßbehälters (2) ausfließt und nach dem Meßvorgang das Dreiwegeventil (3) den Vorratsbehälter (1) wieder zuschaltet.

EP 0 019 856 A1

0019856

AGFA-GEVAERT
AKTIENGESELLSCHAFT
Patentabteilung

5090 Leverkusen, Bayerwerk
HRS/W /Kü

Verfahren und Vorrichtung zur volumetrischen
Messung von Flüssigkeiten

Die Erfindung betrifft ein Verfahren und eine Vorrichtung zur volumetrischen Meßung pulsierender oder
kontinuierlich geförderter oder kontinuierlich
fließender Flüßigkeitsmengen.

In der Industrie sind eine Vielzahl von Meßverfahren
und -vorrichtungen zur Volumenmeßung von Flüßigkeiten
bekannt. Hierbei läßt sich die Volumenmeßung nur
schwer mit genügender Genauigkeit auf eine Längenmeßung zurückführen. Bekannt sind die statischen Verfahren, bei welchen geeichte Meßgefäße oder Pipetten
gefüllt werden und das Volumen in einer Zeiteinheit
abgelesen wird. Diese Verfahren arbeiten diskontinuierlich und erlauben nur eine Stichprobenkontrolle
des fließenden oder geförderten Volumens. Das gleiche
gilt für gravimetrische Verfahren, bei welchen das
Volumen pro Zeit durch Wägen (aus Masse und Dichte)
ermittelt wird.

AG 1644

- 2 -

Andere technische Meßgeräte arbeiten nach dem Verdrängungsprinzip, wobei die gesamte Flüßigkeitsmenge durch eine Meßkammer fließt und deren Füllungen gezählt werden.

Einen Übergang zu den dynamischen Meßgeräten bilden die Flügelradzähler. Die Flüßigkeit treibt ein turbinenartiges Flügelrad an und die Umdrehungen werden mechanisch oder elektrisch auf ein Zählwerk übertragen.

Die dynamischen Volumenmeßungen werden mit Vorteil bei großen Volumen angewendet. Hierbei wird der Druckunterschied gemessen, der in der strömenden Flüßigkeit entsteht, wenn deren Geschwindigkeit durch eine in die Rohrleitung eingebrachte Blende vorübergehend vergrößert wird.

Andere Meßverfahren zur Bestimmung des fließenden Volumens verwenden die Abkühlung eines erhitzten Drahtes in der Strömung, die Änderung der Induktivität oder die Reflexion des Ultraschalles in den strömenden Medien zur Ermittlung der Strömungsgeschwindigkeit und somit des Volumens.

Bei allen Meßverfahren entsteht für eine Volumenmeßung ein erheblicher meßtechnischer und damit finanzieller Aufwand, wenn Messegeräte benötigt werden, mit denen eine Vielzahl von Meßungen

AG 1644

- 3-

mit einer ausreichenden Genauigkeit durchgeführt
werden sollen. Die erreichbare Meßgenauigkeit hängt
außerdem in hohem Maße von den produktspezifischen,
chemischen und physikalischen Eigenschaften der
Flüßigkeiten ab. Verändert sich der Mengenstrom
in weiten Bereichen, so ist es erforderlich die Meßgeräte, oder zumindest die Meßwertgeber, auszuwechseln, was oft nur bei Stillstand der Anlage erfolgen kann. Auch lassen sich mit den bekannten Messeeinrichtungen pulsierende, also diskontinuierliche
Volumenströme nicht direkt erfassen,sondern nur mit
zusätzlichem Aufwand wie zum Beispiel Integrationsgliedern.

Der Erfindung liegt die Aufgabe zugrunde ein Verfahren und eine Vorrichtung zu schaffen, welche weitgehendst unabhängig von den produktspezifischen
Eigenschaften und der Größe des Förderstromes der
Flüßigkeiten pulsierende oder kontinuierlich fließende
Flüßigkeiten volumetrisch in einfacher Weise und mit
hoher Genauigkeit zu messen erlaubt.

Die Aufgabe wurde erfindungsgemäß dadurch gelöst,
daß

die aus einem Vorratsbehälter ausfließende Flüssigkeit
gleichzeitig von einer Förderpumpe gefördert wird und
einen kommunizierenden Meßbehälter auffüllt

zur Meßung der von der Förderpumpe geförderten
Flüßigkeitsmenge ein Dreiwegeventil so geschaltet wird,
daß die in dem Meßbehälter befindliche Flüßigkeit
entleert wird, während der Vorratsbehälter abgeschaltet
ist

AG 1644

- 4 -

die Zeit (t) gemessen wird, die erforderlich ist, um das bekannte Volumen des Meßbehälters von einem oberen Meßpunkt einer Elektrode bis zum unteren Meßpunkt einer zweiten Elektrode abzusenken das Volumen pro Zeit über einen Rechner ausgegeben wird und

das Dreiwegeventil nach dem Meßvorgang den Vorratsbehälter wieder zuschaltet.

In einer speziellen Ausführungsform werden zwei oder mehrere Meßbehälter und zwei oder mehrere Dreiwegeventile so geschaltet, daß die Förderung der Flüßigkeit durch die Förderpumpe stets aus einem Meßbehälter erfolgt und der oder die anderen Meßbehälter aus dem Vorratsbehälter aufgefüllt werden.

In dieser Ausführungsform wird erreicht, daß die Meßung während der Auffüllzeit des Meßbehälters nicht unterbrochen wird und die volumetrischen Meßungen ständig erfolgen können.

Gemäß einer anderen Ausführungsform wird die Flüßigkeit statt durch die Förderpumpe durch freien Auslauf über ein Drosselorgan aus dem Vorratsbehälter ausgetragen.

Die Erfindung beinhaltet auch einen Meßbehälter zur Durchführung des Meßverfahrens der dadurch gekennzeichnet ist, daß sein Innenraum konisch mit großem

AG 1644

- 5 -

Durchmesser und die Flüßigkeitsstandmeßzonen zylindrisch
mit kleinem Durchmesser ausgeführt sind.

Besonders vorteilhaft ist das obere Ende der Elektrode in
einer nach oben abgedichteten Luftkammer angeordnet
und der Meßbehälter unterhalb dieser Luftkammer mit
einer Entlüftung versehen.

Eine gute Reproduzierbarkeit des Behältervolumens
wird erfindungsgemäß dadurch erreicht, daß die Innenwandungen des Behälters aus einem schlecht benetzbaren und säurebeständigem Material mit geringem Wärmedehnungskoeffizienten ausgeführt werden.

Mit dem erfindungsgemäßen Verfahren und dem speziellen
Meßbehälter können erfreulicherweise weitgehendst unabhängig von den produktspezifischen Eigenschaften
der zu messender Flüßigkeiten und der Größe des Förderstromes die Fördermengen mit großer Genauigkeit bestimmt werden. Das Verfahren erlaubt eine quasi kontinuierliche Flüssigkeits -Fördermengen-Kontrolle. Es
ist so möglich, die verschiedenen auf Dosiereinrichtungen Einfluß nehmenden produktabhängigen Parameter, wie Temperatur, Luftdruck oder Druck und Zähigkeit manuell oder durch ein geeignetes Rechnerprogramm
schnell und genau auszugleichen.

Weitere Vorteile und Merkmale sind in folgender Beschreibung in Verbindung mit beiliegenden Zeichnungen
zu ersehen.

AG 1644

- 6 -

Es zeigt

Figur 1        den schematischen Aufbau der Meßanordnung
               mit einer Förderpumpe
Figur 2 a,2b   schematische Darstellung der Anordnung
               bei Verwendung von 2 Meßbehältern die
               alternierend eingesetzt werden
Figur 3        die Meßanordnung mit einem Drosselorgan
Figur 4        den Meßbehälter im Schnitt.

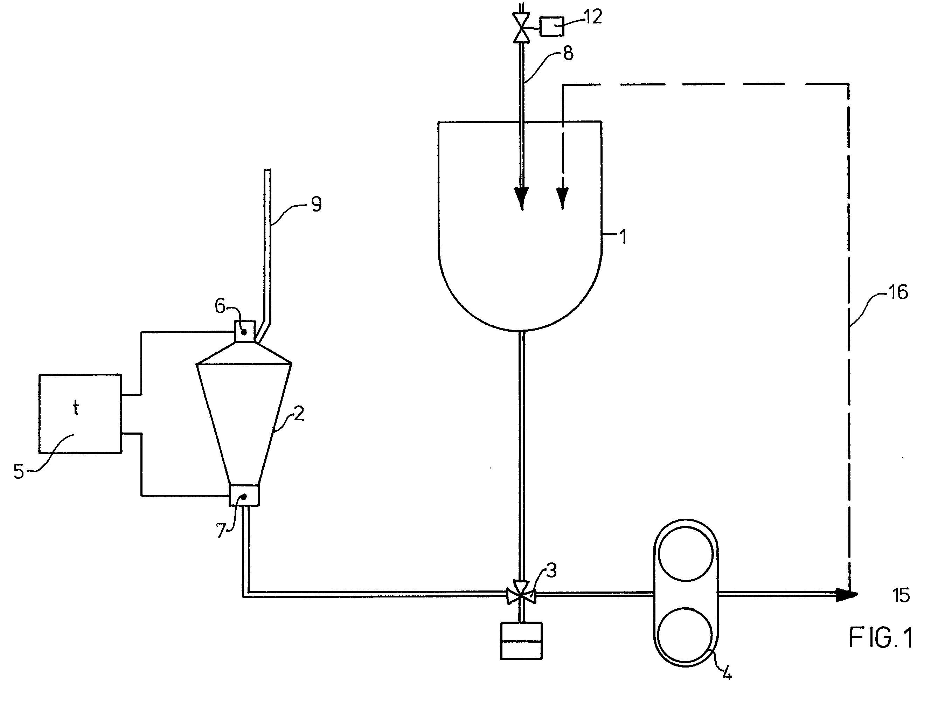

In der Anordnung gemäß Figur 1 wird die Flüßigkeit aus einem Vorratsbehälter 1 über ein Dreiwegeventil 3 und eine Förderpumpe 4 zu einem Verbraucher 15 ausgetragen. Das Dreiwegeventil 3 ist zuerst elektrisch oder manuell so geschaltet, daß alle 3 Wege offen sind. Durch die kommunizierende Verbindung des Vorratsbehälters 1 mit dem Meßbehälter 2 füllt sich dieser mit der Flüßigkeit. Die Luft entweicht über die Entlüftungsleitung 9.

Für den Volumenmeßvorgang wird durch ein manuell oder automatisch gegebenes Signal das Dreiwegeventil 3 so geschaltet, daß der Zufluß vom Behälter 1 gesperrt ist. Bei dieser Stellung des Dreiwegehahnes 3 wird das geförderte Volumen der Flüßigkeit ausschließlich vom Meßbehälter 2 geliefert. Erreicht das Flüßigkeitsniveau im Meßbehälter 2 den oberen Meßpunkt 6, so wird die Zeitmessung im Rechner 5 gestartet und beim Erreichen des unteren Meßpunktes 7 wieder gestoppt.

AG 1644

- 7 -

Die so ermittelte Zeit (t) ist ein direktes Maß
für die je Zeiteinheit t geförderte Flüßigkeitsmenge V ,
wobei gilt

$$\dot{V} = \frac{\Delta V}{t} \quad .$$

Hierbei ist $\Delta$ V das Flüßigkeitsvolumen zwischen den
Meßpunkten 6 und 7 im Behälter 2.

Gleichzeitig mit der Beendigung der Zeitmessung wird
das Dreiwegeventil 3 wieder in die Anfangsstellung
gebracht, wobei der Vorratsbehälter 1 wieder zugeschaltet wird und bei Förderung aus dem Vorratsbehälter 1
der Meßbehälter 2 im Bypaß erneut gefüllt wird.
Für jeden Meßvorgang errechnet der Rechner 5 das
Volumen/Zeit und zeigt dieses als Wert an und/oder
regelt den Antrieb der Förderpumpe 4 zur Konstanthaltung eines gewünschten Sollfördervolumens. Der Rechner 5
kann auch dazu eingesetzt werden, den Meßvorgang
durch Schalten des Dreiwegeventiles 3 automatisch
ständig oder in Zeitintervallen zu wiederholen. Unter
Vernachlässigung der kurzen Füllzeit des Meßbehälters 2
kann mit diesem Verfahren eine quasi kontinuierliche
Fördermengen-Kontrolle oder Regelung durchgeführt
werden.

Es ist so möglich, die für verschiedene Produkte gewünschten Parameter
wie zum Beispiel Temperatur, Luftdruck und Druck oder
Zähigkeit der Flüßigkeiten durch ein geeignetes
Rechnerprogramm auszugleichen und dem Verbraucher 15

AG 1644

- 8 -

eine exakt dosierte Menge zuzuführen.
Zur Einstellung der Soll-Fördermenge kann über
eine Kreislaufschaltung 16 die Meßeinrichtung oder
Regeleinrichtung bereits vor der Fabrikationsaufnahme eingefahren
werden, wobei die Flüßigkeit dem Vorratsbehälter 1 wieder zugeführt wird.

Um zu verhindern, daß bei Störungen des oder während
des Meßvorganges das Dreiwegeventil 3 geschlossen
bleibt, läuft gleichzeitig mit dem Start der Messung im Rechner 5
eine Kontrollzeit an, die einige Sekunden größer ist,
als die Meßzeit. Nach Ablauf dieser Zeit wird das
Dreiwegeventil 3 zwangsweise umgeschaltet und eine
Unterbrechung des Förderstromes sicher verhindert.

Der Vorratsbehälter 1 wird über einen Zulauf 8 und eine
übliche Niveauregelung 12 gesteuert nachgefüllt, so
daß stets eine gleiche ausreichende Menge an Flüßigkeit zur Verfügung steht.

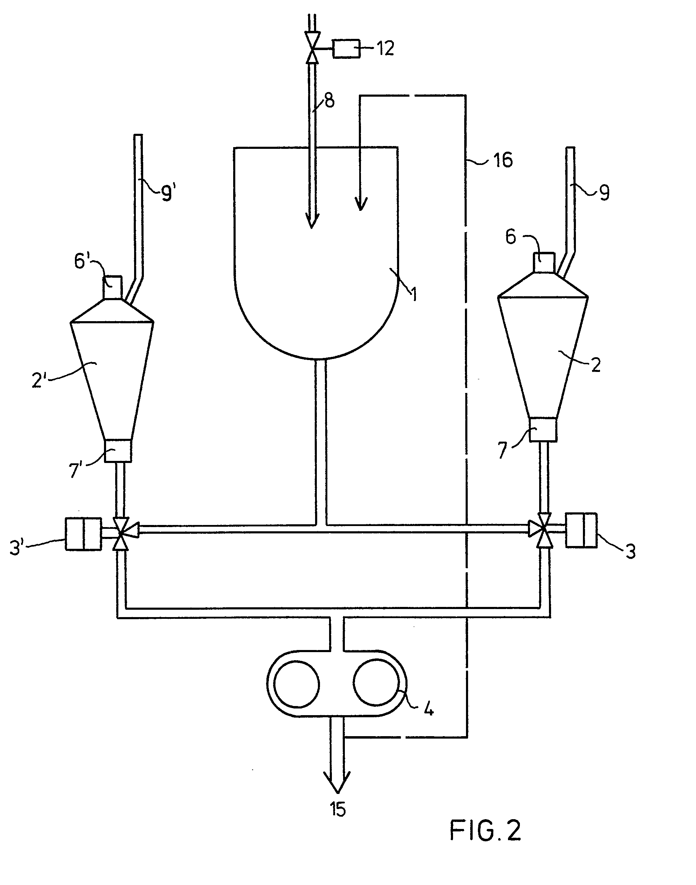

In einer speziellen Ausgestaltung des Verfahrens werden,
mindestens zwei Meßbehälter 2,2' verwendet, die so
geschaltet sind, daß beim Messen der Auslaufmenge des
ersten Meßbehälters 2 der zweite 2' oder weitere Meßbehälter bereits gefüllt werden und so, ohne Abwarten
der Auffüllzeit, kontinuierlich Meßwerte für Volumen/
Zeit ausgedruckt werden oder zur Regelung des Volumenstromes zur Verfügung stehen. Eine derartige Schaltung
ist schematisch in der Figur 2 dargestellt.

AG 1644

In Figur 2 ist das Dreiwegeventil 3 so geschaltet, daß der Meßbehälter 2 vom Vorratsbehälter 1 gefüllt wird, während der Meßbehälter 2' zur Meßung des Volumens vom Vorratsbehälter 1 abgeschaltet ist und die Flüßigkeit über das Dreiwegeventil 3' durch die Pumpe 4 gefördert wird. Anschließend erfolgt dann die Füllung des Meßbehälters 2' und die Entnahme der Flüßigkeit zum Messen des Volumens aus dem Behälter 2 über das Dreiwegeventil 3.

Die Steuerung der Dreiwegeventile 3,3' und des Meßvorganges erfolgt alternierend durch einen Rechner 5 mit Zeitmeßeinrichtungen, wobei der jeweilige Meßwert für Volumen/Zeit ausgedruckt und/oder zur Regelung des Volumenstromes durch Drehzahlregelung der Förderpumpe 4 verwendet wird (nicht darstellt).

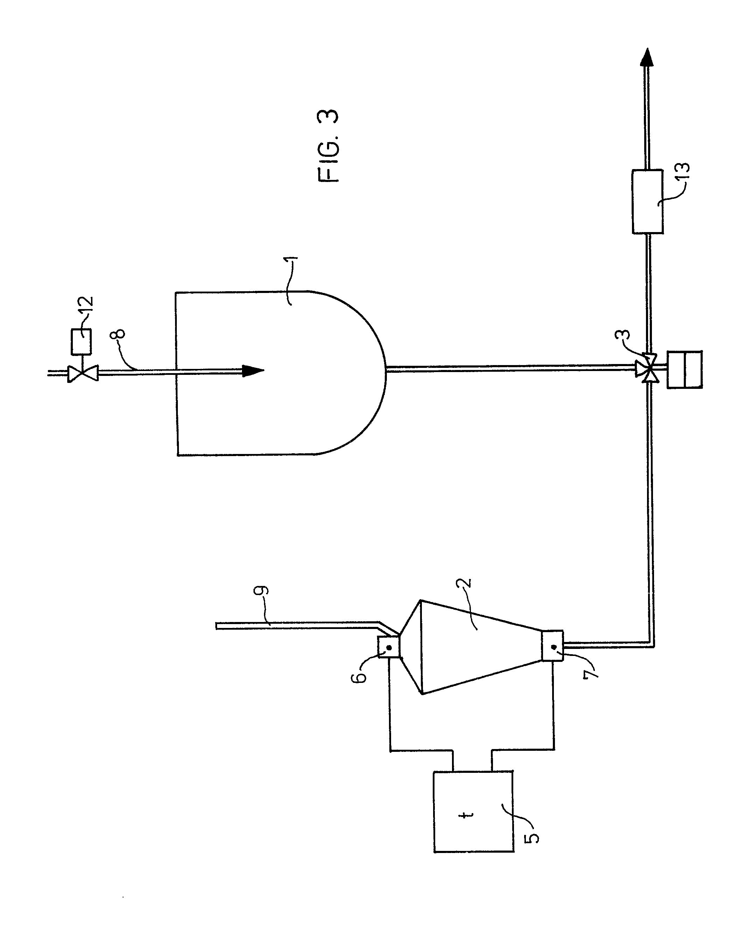

Figur 3 zeigt eine Anordnung, bei welcher die Pumpe 4 der Figur 1 durch ein Drosselorgan 13 ersetzt ist. Hierbei wird die Flüssigkeit aus dem Vorratsbehälter 1 durch freien gedrosselten Auslauf mittels Schwerkraft ausgetragen. Das Meßverfahren erfolgt wie bei Figur 1 beschrieben.

Auch bei dem Verfahren nach der Figur 2 läßt sich statt der Pumpe 4 ein Drosselorgan 13 zur Auslaufregulierung verwenden. Im Falle einer gewünschten Regelung wird der Auslaufquerschnitt des Drosselorganes durch den Rechner 5 über ein Stellglied so verändert, daß das Auslaufvolumen dem vorgegebenen Sollwert entspricht.

AG 1644

- 10 -

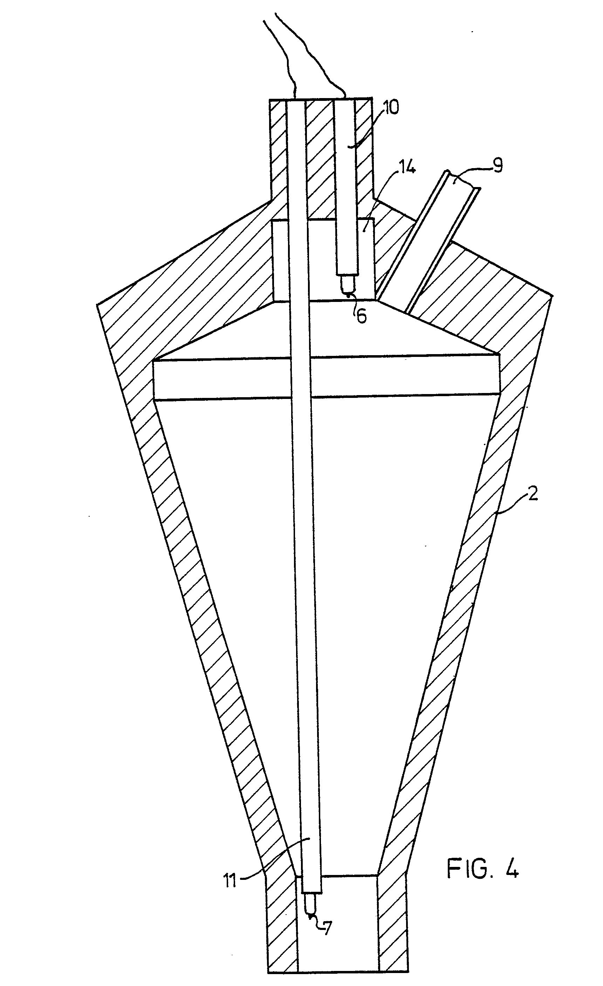

Figur 4 zeigt eine Ausführungsform des für die Durchführung des Verfahrens verwendeten Meßbehälters 2. Zur Aufnahme eines möglichst großen Volumens und zur Verhinderung einer Belagsbildung durch Sedimentation ist der Meßbehälter innen konisch geformt. In den verengten zylindrischen Teilen des Meßbehälters 2 sind die zur Meßung erforderlichen Elektroden 10,11 angeordnet. Die Elektroden 10,11 werden von oben luftdicht in die Meßräume eingeführt. Die obere Elektrode 10 befindet sich in dem zylinderischen als Luftkammer 14 ausgebildeten Raum, der stets ein Luftvolumen oberhalb der zu messenden Flüßigkeit einschließt. Hierdurch werden Meßfehler durch Schaum- und Flüßigkeitsfilmbildung vermieden. Die Entlüftungsleitung 9 befindet sich unterhalb der Luftkammer 14. Die untere Elektrode 11 ragt mit ihrem Meßpunkt 7 in den engen unteren zylindrischen Teil des Meßbehälters 2.

Der Meßbehälter 2 besteht vorteilhafterweise aus einem Material, welches einen geringen Wärmedehnungskoeffizienten besitzt. Die Innenflächen werden aus einem Material gefertigt oder mit einem Material überzogen, welches schlecht benetzt und so die Reproduzierbarkeit der Meßergebnisse auch für verschiedene Flüßigkeiten gewährleistet. Je nach der Art der Flüßigkeit kann die Innenwand auch aus einem säurebeständigen Material gefertigt oder mit diesem beschichtet werden. Der Meßbehälter ist einfach anzufertigen und wartungsfrei bis

AG 1644

- 11 -

auf eventuelle erforderliche Reinigungen durch Spülen beim Wechsel der Flüßigkeiten. Das die absolute Meßgröße bestimmende Volumen $\Delta$ V zwischen den Meßpunkten 6 und 7 an den Elektroden 10 und 11 wird durch Auslitern bei Normalbedingungen einmalig bestimmt und die Werte in den Rechner eingegeben. Das exakte Einstellen bestimmter Volumen läßt sich in gewissen Grenzen durch Verschieben der Elektroden in senkrechter Richtung vornehmen.

Zur Erfassung der Zeit (t) für das aus dem Meßbehälter 2 auslaufende Volumen $\Delta$ V wird in der Zeitmeßeinrichtung im Rechner 5 eine digitale Stoppuhr mit einer hohen Auflösung von zum Beispiel 1/100 Sekunde verwendet. Mit der besonderen Formgebung des Meßbehälters 2 und der exakten Zeiterfaßung kann für eine große Bandbreite der Fördermenge eine hohe Genauigkeit der Volumenmessungen erreicht werden.

Nachfolgend werden 2 Beispiele von Ausführungsformen des erfindungsgemäßen Verfahrens für eine Feindosierung kleiner Flüssigkeitenmengen gegeben.

- 12 -

### Beispiel 1

In einer Feindosieranlage wurde ein Meßbehälter
mit 250 cm$^3$ Inhalt ($\Delta V$) zwischen den Elektrodenmeßpunkten verwendet. Die Genauigkeit der Zeitmessung (t)
für den Auslauf des Volumens ($\Delta V$) betrug $\pm$ 0,05 sec.
und die Auslaufzeit t = 600 Sekunden.
Die Förderpumpendrehzahl betrug 12,5 U/min bei einer
Förderleistung von 2 cm$^3$/Umdrehung.

Nach der Formel

$$\dot{V} = \frac{\Delta V}{t} = \frac{250 \ cm^3 . \ 60}{600} = 25 \ cm^3/min.$$

beträgt die pro Minute geförderte Flüssigkeit
$\dot{V}$ = 25 cm$^3$. Die Genauigkeit der Fördermenge betrug
$\pm$ 0,021 cm$^3$ oder $\pm$ 8,3 . 10$^{-5}$%.

### Beispiel 2

Mit der gleichen Anlage wurde das 60-fache Volumen
bei erhöhter Drehzahl der Förderpumpe (750 U/min.) dosiert.
Bei gleicher Genauigkeit der Zeitmessung ist das
Volumen ($\dot{V}$) bei der Auslaufzeit (t) von 10 Sekunden

$$\dot{V} = \frac{\Delta V}{t} = \frac{250 \ .60}{10} = 1500 \ cm^3/min .$$

Die Genauigkeit der Fördermenge betrug hierbei ca. $\pm$ 7,5 cm$^3$
oder $\pm$ 5,0 . 10$^{-3}$ %.

AG 1644

- 13 -

Die Beispiele zeigen, daß sich das Verfahren und die Anordnung in weiten Bereichen variieren lassen. Das Verfahren ist nicht auf eine Feindosierung beschränkt, sondern läßt sich auch bei der Förderung großer Volumen bei entsprechend dimensionierten Meßbehältern und Pumpen oder Auslaufdrosseln mit Erfolg einsetzen.

- 14 -

Patentansprüche

1) Verfahren zur volumetrischen Meßung pulsierender oder kontinuierlich geförderter und/oder kontinuierlich fließender Flüssigkeitsmengen, dadurch gekennzeichnet, daß

die aus einem Vorratsbehälter (1) ausfließende Flüßigkeit gleichzeitig von einer Förderpumpe (4) gefördert wird und einen kommunizierenden Meßbehälter (2) auffüllt

zur Meßung der von der Förderpumpe (4) geförderten Flüßigkeitsmenge ein Dreiwegeventil (3) so geschaltet wird, daß die in dem Meßbehälter (2) befindliche Flüßigkeit entleert wird, während der Vorratsbehälter abgeschaltet ist

die Zeit (t) mittels Zeitmeßeinrichtung in einem Rechner (5) gemessen wird, die erforderlich ist, um das bekannte Volumen des Meßbehälters (2) von einem oberen Meßpunkt (6) einer Elektrode (10) bis zu einem unteren Meßpunkt (7) einer zweiten Elektrode (11) abzusenken

das aus der Zeitmessung errechnete Volumen per Zeit über einen Rechner (5) ausgegeben und/oder zur Regelung des Volumenflusses verarbeitet wird und

das Dreiwegeventil (3) nach dem Meßvorgang den Vorratsbehälter (1) wieder zuschaltet.

AG 1644

2) Verfahren nach Anspruch 1, dadurch gekennzeichnet, daß

mindestens ein weiterer Meßbehälter(2') und mindestens ein weiteres Dreiwegeventil(3'), so geschaltet werden, daß die Förderung der Flüßigkeit durch die Förderpumpe (4) stets aus einem Meßbehälter (2) erfolgt und der oder die anderen Meßbehälter (2') gleichzeitig aus dem Vorratsbehälter (1) aufgefüllt werden.

3) Verfahren nach Anspruch 1 oder 2, dadurch gekennzeichnet, daß
die Flüßigkeit statt durch eine Förderpumpe (4) durch freien Auslauf über ein Drosselorgan (13) aus dem Vorratsbehälter (1) ausgetragen wird.

4) Meßbehälter zur Durchführung des Verfahrens nach den Ansprüchen 1 bis 3, dadurch gekennzeichnet, daß der Innenraum des Meßbehälters konisch und die Flüssigkeitsstand-Meßzonen zylinderisch ausgeführt sind.

5) Meßbehälter zur Durchführung des Verfahrens nach den Ansprüchen 1 bis 3, dadurch gekennzeichnet, daß die obere Elektrode (10) in einer nach oben abgedichteten Luftkammer (14) angeordnet ist und der Meßbehälter (2) unterhalb der Luftkammer (14) mit einer Entlüftung (9) versehen ist.

AG 1644

6) Meßbehälter zur Durchführung des Verfahrens nach den Ansprüchen 1 bis 3, dadurch gekennzeichnet, daß die Innenwandungen des Meßbehälters (2) aus einem schlecht benetzbaren, säurebeständigen Material mit geringem Wärmedehnungskoeffizienten ausgeführt sind.

AG 1644

FIG.1

0019856
1/4

FIG.2

FIG. 3

FIG. 4

# Europäisches Patentamt

# EUROPÄISCHER RECHERCHENBERICHT

**0019856**
Nummer der Anmeldung

**EP 80 10 2848**

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | <u>US - A - 2 441 402</u> (J.L. EDELEN)<br>  * Abbildungen 1-4; Spalte 3, Zeilen 13-51; Anspruch 1 *<br><br>-- | 1 |
| | MTZ MOTORTECHNISCHE ZEITSCHRIFT, Band 31, Nr. 2, Februar 1970, Seiten 64-67<br>Stuttgart, DE.<br>H.J. HENNING: "Die Messung kleiner Durchflussmengen"<br>  * Abbildung 3; Seite 66, rechte Spalte *<br><br>-- | 1,3 |
| | <u>US - A - 3 369 394</u> (H. GOLDS-<u>WORTHY</u>)<br>  * Abbildungen 1-3; Zusammenfassung *<br><br>-- | 1 |
| | <u>US - A - 3 094 871</u> (H.V. SMITH)<br>  * Abbildungen 1,5; Spalte 5, Zeilen 52-59 *<br><br>-- | 2,4 |
| | <u>GB - A - 287 482</u> (W.E. FAVRE)<br>  * Abbildungen 1-4,6; Anspruch 2 *<br><br>-- | 2 |
| | <u>US - A - 3 332 283</u> (J.C. MICHALO-<u>WICZ</u>)<br>  * Abbildung 4; Spalte 2, Zeile 67 - Spalte 3, Zeile 4 *<br><br>--<br><br>./. | 1,3 |

### KLASSIFIKATION DER ANMELDUNG (Int.Cl.³)

G 01 F   9/00
         11/28

### RECHERCHIERTE SACHGEBIETE (Int. Cl.³)

G 01 F   9/00
         3/36
         3/38
        23/24
        25/00

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

---

X   Der vorliegende Recherchenbericht wurde für alle Patentansprüche erstellt.

| Recherchenort | Abschlußdatum der Recherche | Prüfer |
|---|---|---|
| Den Haag | 11-09-1980 | THIBO |

EPA form 1503.1   06.78

Europäisches Patentamt

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| | FR - A - 2 223 675 (E. LUKAS)<br>* Abbildung 1 *<br><br>-- | 4 | |
| | US - A - 2 754 381 (E.J. MARTIN et al.)<br>* Abbildungen 1-3 *<br><br>-- | 4 | |
| | US - A - 3 115 038 (H.B. BABSON)<br>* Abbildungen 1,2; Spalte 3, Zeilen 39-73 *<br><br>-- | 5 | RECHERCHIERTE SACHGEBIETE (Int. Cl.³) |
| | DE - A - 1 473 193 (GEBR. SCHARPF KG, MASCHINENFABRIK)<br>* Abbildungen 1,4,5; Anspruch 1 *<br><br>-- | 5 | |
| | BE - A - 648 181 (WURTTEMBERGISCHE METALLWARENFABRIK)<br>* Abbildungen 1-3; Anspruch 1 *<br><br>---- | 5 | |

EPA Form 1503.2 06.78